# EUROPÄISCHE PATENTSCHRIFT

(11) **EP 4 132 332 B1**
(45) Veröffentlichungstag und Bekanntmachung des Hinweises auf die Patenterteilung: **16.08.2023**
(21) Anmeldenummer: 21720167.2
(22) Anmeldetag: 09.04.2021
(51) Int. Cl.: A47J 42/08

(54) **VERSTELLBARE GEWÜRZMÜHLE**
ADJUSTABLE SPICE MILL
MOULIN À ÉPICES RÉGLABLE

(30) Priorität: 09.04.2020 AT 503082020
(43) Veröffentlichungstag der Anmeldung: 15.02.2023
(73) Patentinhaber: Joma Kunststofftechnik GmbH, 2345 Brunn am Gebirge (AT)
(72) Erfinder: FRIES, Rudolf, 2572 Kaumberg (AT)
(74) Vertreter: SONN Patentanwälte OG
(86) Internationale Anmeldenummer: PCT/AT2021/060119
(87) Internationale Veröffentlichungsnummer: WO 2021/203156

(56) Entgegenhaltungen:
- EP-A1- 1 459 665
- FR-A1- 2 857 842

## Beschreibung

Die Erfindung betrifft ein Mahlwerk für eine Gewürzmühle gemäß dem Oberbegriff von Anspruch 1 und eine Gewürzmühle gemäß dem Oberbegriff von Anspruch 3. Ein derartiges Mahlwerk bzw. eine derartige Gewürzmühle sind aus der EP 1 459 665 A1 bekannt.

Bei derartigen Gewürzmühlen wird zwischen einer Außenfläche des Rotors und einer Innenfläche des Stators ein Mahlspalt ausgebildet, in welchem das Mahlgut durch eine Relativdrehung zwischen Rotor und Stator gemahlen wird. Die relevanten Oberflächen von Stator und Rotor können verschieden ausgestaltet sein und können beispielsweise Zähne aufweisen, zwischen denen das Mahlgut gemahlen wird. Der Mahlgrad des Mahlwerks wird dabei durch den Abstand zwischen den Flächen von Stator und Rotor bestimmt. Um das Mahlgut zu mahlen wird das Betätigungselement der Betätigungseinheit gedreht und die Drehung auf den Rotor übertragen, welcher dann im Zusammenspiel mit dem Stator das Mahlgut zerkleinert. Solche Gewürzmühlen finden vor allem als vorab gefüllte Gewürzmühlen, insbesondere Einwegmühlen, Anwendung.

Aus der EP 2 454 978 A1 ist bereits eine derartige Gewürzmühle bekannt, bei welcher ein Mahlwerk auf einen Behälter aufgeprellt wird, wobei vorteilhafterweise eine Einstellung des Mahlgrads in zwei Stufen möglich ist. Zur Einstellung des Mahlgrads sieht das Mahlwerk am Stator eine vorspringende Rippe vor, über welche der Rotor in unterschiedlichen axiale Positionen anordenbar ist. Zum Verstellen des Mahlgrads kann ein mit dem Rotor drehfest verbundenes Betätigungselement in Längsrichtung der Mühle verschoben werden, so dass über die Längsverschiebung des Betätigungselements zugleich die relative Position des Rotors gegenüber dem Stator und somit der Mahlgrad verstellt wird. Um den Rotor in einer oberen Grob-Mahlstellung zu positionieren ist am Behälter eine umlaufende Rippe vorgesehen, an welcher vorspringende Ansätze in einer Endposition anschlagen.

Aus der WO 2015/181712 A1 ist ein weiteres Mahlwerk bekannt, welches auf einen Behälter aufgeprellt werden kann und welches eine Einstellung des Mahlgrads in zwei Stufen vorsieht. Zur Einstellung des Mahlgrads weist das Mahlwerk am Stator eine vorspringende Rippe auf, welche in zwei unterschiedliche Nuten am Rotor des Mahlwerks eingreifen kann. Die Nuten sind in axiale Richtung zueinander versetzt. Zum Verstellen des Mahlgrads wird die Rippe von einer Nut in die andere verschoben. Durch diese Verschiebung verändert sich der Abstand zwischen Stator und Rotor, an welchen die Mahlflächen konisch angeordnet sind. Dadurch kann der Mahlgrad eingestellt werden.

Die WO 2005/046411 A1 zeigt ebenfalls ein Mahlwerk, welches eine Verstellung des Mahlgrades durch axiale Verstellung des Rotors zum Stator ermöglicht. Dazu sind ebenfalls am rotierenden Teil Nuten axial zueinander versetzt angeordnet und am Stator ist ein umlaufender Vorsprung zum Eingriff in diese Nuten vorgesehen. Die Verstellung des Mahlgrads erfolgt hier ebenfalls durch eine Längsverschieben des umlaufenden Vorsprungs von einer Nut in die andere. Das Mahlwerk verfügt weiters über ein Gewinde um dieses auf einen Behälter aufzuschrauben.

Nachteilig ist bei diesen Verstellmechanismen, dass die Kraftaufbringung zum Verstellen, vor allem beim Auseinanderziehen, nicht immer leichtgängig ist. Zudem ist für den Benutzer nur schwer erkenntlich, in welcher Mahlgrad-Stellung sich das Mahlwerk befindet.

Es ist Aufgabe der Erfindung diese Nachteile des Standes der Technik zumindest teilweise zu lindern oder zur Gänze zu beseitigen. Insbesondere ist es Aufgabe der Erfindung, eine Gewürzmühle und ein Mahlwerk zu schaffen, bei welcher/welchem der Mahlgrad auf einfache und bedienerfreundliche Weise verstellbar ist.

Diese Aufgabe wird von einem Mahlwerk mit den Merkmalen von Anspruch 1 und von einer Gewürzmühle mit den Merkmalen von Anspruch 3 gelöst.

Erfindungsgemäß weist das Verstellelement ein Gewinde auf, mit dem es mit dem Behälter verbindbar ist, und der Behälter weist ein Gegengewinde für das Gewinde des Verstellelements auf, so dass die Position des Rotors in Richtung der Längsachse mittels einer Verdrehung des Verstellelements gegenüber dem Behälter einstellbar ist. Damit ist es möglich auf umlaufende, Längsrichtung zueinander beabstandete Nuten zu verzichten, welche jeweils einen bestimmten Mahlgrad definieren. Es wird hingegen ein leichtgängiges und genaues Verstellen des Mahlgrades ermöglicht, da, bei entsprechender Ausgestaltung der Steigung des Gewindes, eine zweckmäßige Übersetzung der Rotationsbewegung des Verstellelement in eine lineare Bewegung der Betätigungseinheit und somit des Rotors erzielt wird. Zugleich kann ein gewollter Mahlgrad aus einem kontinuierlichen Spektrum an Mahlgraden ausgewählt werden oder aber es können mehrere, vorzugsweise zumindest zwei vordefinierte Positionen des Verstellelements und somit des Rotors bestimmt werden. Das Mahlwerk kann gegen ein vollständiges Abschrauben des Verstellelements vom Behälter gesichert sein.

Bevorzugt weist das Gegengewinde des Behälters die gleiche Steigung wie das Gewinde des Verstellelements auf. Dadurch wird gewährleistet, dass das Aufschrauben des Mahlwerks und das Verstellen des Mahlgrades leichtgängig funktioniert.

Vorzugsweise sind Verstellelement und Betätigungselement über eine Feder-Nut-Verbindung miteinander verbunden. Dies ermöglicht bei der Herstellung des Mahlwerks ein besonders leichtes Verbinden der Betätigungseinheit mit dem Verstellelement durch einschnappen der Feder-Nut-Verbindung. Gleichzeitig wird mit dieser Feder-Nut-Verbindung gewährleistet, dass Verstellelement und Betätigungseinheit drehbar und in Richtung der Längsachse gesichert verbunden sind.

Die oben beschriebene Aufgabe wird auch von einer Gewürzmühle gelöst, bei welcher ein erfindungsgemäßes Mahlwerk vorgesehen ist, wobei das Verstellelement ein Gewinde aufweist, mit dem es mit einem Behälter verbunden ist, und der Behälter ein Gegengewinde für das Gewinde des Verstellelements aufweist, so dass die Position des Rotors in Richtung der Längsachse mittels einer Verdrehung des Verstellelements gegenüber einem Behälter einstellbar ist. Mit der erfindungsgemäßen Ausbildung wird insbesondere eine Rotation des Verstellelements von einer Rotation der Betätigungseinheit entkoppelt. Somit kann das Mahlgut durch Drehung des Betätigungsteils gemahlen werden, ohne dabei das Verstellelement mitzubewegen und dadurch den Mahlgrad zu verändern. Zudem kann eine Drehbewegung des Verstellelements in eine axiale Bewegung der Betätigungseinheit umgesetzt werden, so dass durch eine Drehung des Verstellelements gegenüber einem Behälter, der Rotor relativ zum Stator in Längsrichtung bewegt wird und somit der Mahlgrad verstellt wird.

In einer Ausführungsform weisen das Verstellelement und der Behälter zusammenwirkende Rückdrehsicherungselemente auf, so dass ein auf dem Behälter aufgeschraubtes Verstellelement nicht zerstörungsfrei vom Behälter lösbar ist. Vorzugsweise sind die Rückdrehsicherungselemente am Behälter und am Verstellelement so angeordnet, dass das Verstellelement im verbundenen Zustand mit dem Behälter in einem definierten Bereich drehbar ist. Die Rückdrehsicherungselemente ermöglichen es zum einen, die Mühle als Einweg-Gewürzmühle zu produzieren, bei welcher das Mahlwerk auf den Behälter aufgeschraubt werden kann und nicht aufgesteckt werden muss. Zum Anderen kann durch die Rückdrehsicherungselemente ein Bereich festgelegt werden, in welchem der Mahlgrad verstellbar ist. Dies verhindert beispielsweise eine zu grobe Einstellung des Mahlgrads. Die Rückdrehsicherungselemente verhindern aber auch ein versehentliches Abschrauben des Verstellelements vom Behälter.

In einer weiteren Ausführungsform kann der Behälter als Rückdrehsicherungselement einen rampenförmigen Vorsprung mit einer Auflauffläche und einer Sperrfläche aufweisen und das Verstellelement als Rückdrehsicherungselement ein in Richtung des Behälters auskragendes Federelement aufweisen, wobei beim Aufschrauben des Verstellelements auf den Behälter das Federelement über die Auflauffläche elastisch verformt wird und über den Vorsprung gleitet, so dass das Federelement bei einer Drehbewegung entgegen der Aufschraubrichtung blockierend an der Sperrfläche anliegt. Diese Ausführungsform ermöglicht bei der Herstellung der Mühle ein einfaches und zerstörungsfreies Aufschrauben des Mahlwerks auf den Behälter. Gleichzeitig ermöglichen die Sperrflächen, dass im verbundenen Zustand eine Drehung entgegen der Aufschraubrichtung verhindert wird. Die Blockade durch die Sperrflächen der Rückdrehsicherungselemente kann nur mit erheblichem Kraftaufwand und unter Zerstörung der Federelemente des Verstellelements überwunden werden.

Vorzugsweise weist das Verstellelement an einer Innenseite zumindest einen nach innen in Richtung des Behälters vorspringenden Nocken auf. Der Nocken kann vorzugsweise knapp unterhalb des Gewindes des Verstellelements angeordnet sein. Der Nocken kann, bei entsprechender Ausbildung des Behälters, in dafür vorgesehe Strukturen eingreifen und so eine Drehung des Verstellelements in eine bestimmte Richtung verhindern oder erschweren. Somit kann beispielsweise eine maximale Aufschraubtiefe eingestellt oder das Verstellelement in verschiedenen Positionen relativ zum Behälter rastend positioniert werden.

Vorteilhafterweise ist an einer Außenseite des Behälters zumindest ein nach außen vorspringender Nocken, vorzugsweise an eine Flanke des Gegengewindes unmittelbar anschließend, vorgesehen. Da sich die axiale Position des Nockens des Verstellelements im Verhältnis zum Behälter beim Verdrehen des Verstellelements auf dem Behälter ändert, kann durch ein zielgerichtetes Aufeinandertreffen eines Nockens des Verstellelements an einem Nocken des Behälters, die Verdrehbarkeit des Verstellelements gegenüber dem Behälter begrenzt werden und somit eine Position des Verstellelements definiert werden, mit welcher ein definierter Mahlgrad eingestellt wird. Die Größe und/oder Form der beiden Nocken ist dabei vorteilhafter derart aufeinander abgestellt, dass bei Aufbringen einer erhöhten Drehkraft eine elastische Verformung, insbesondere des Verstellelements eintritt, so dass der Nocken des Verstellelements über den Nocken des Behälters gleiten kann und somit nach einem Überschnappen das Verstellelement weiter verdreht werden kann.

Vorteilhafterweise sind an einer Außenseite des Behälters zumindest zwei in Aufschraubrichtung voneinander beabstandet angeordnete Nocken vorgesehen. In dieser Ausführungsform ist einer der beiden Nocken angrenzend an die Auflauffläche des Verdrehsicherungselements derart angeordnet, dass zwischen diesem Nocken und dem Verdrehsicherungselement eine Art Vertiefung entsteht, die breit genug ist, dass der Nocken des Verstellelements darin aufgenommen werden kann. Der zweite Nocken des Behälters ist in einem gewissen Abstand vom ersten Nocken auf der dem Verdrehsicherungselement gegenüberliegenden Seite des ersten Nockens angeordnet. Durch die beiden Nocken am Behälter ist es möglich, das Verstellelement in zwei unterschiedlichen Positionen am Behälter gegen eine Drehung in eine bestimmte Richtung zu fixieren. Somit können zwei vorher definierte Mahlgrade eingestellt werden, wobei der Unterschied zwischen den beiden Mahlgraden durch den Abstand der beiden Nocken am Behälter festgelegt ist.

Vorzugsweise liegt der zumindest eine Nocken des Verstellelements in einer ersten Drehausrichtung des Verstellelements an einem Nocken des Behälters an, wobei bei Aufbringen einer erhöhten Drehkraft das Verstellelement elastisch verformbar ist, so dass der Nocken des Verstellelements über den Nocken des Behälters bewegbar ist. In dieser Drehausrichtung des Verstellelements befindet sich der Nocken des Verstellelements vorzugsweise in der Vertiefung zwischen dem ersten Nocken und der Auflauffläche des Verdrehsicherungselements des Behälters. Dadurch kann bis zu einer gewissen Drehkraft eine Verdrehung des Verstellelements zum Behälter verhindert und somit ein definierter Mahlgrad eingestellt werden. Durch die elastische Verformbarkeit kann durch Aufbringung einer erhöhten Drehkraft der Nocken des Verstellelements über die Nocken des Behälters bewegt werden. Damit ist es möglich das Verstellelement in eine weitere Stellung zu bewegen und so den Mahlgrad zu verändern.

In einer weiteren Ausführungsform liegt in einer zweiten Drehausrichtung des Verstellelements der Nocken des Verstellelements an dem zweiten Nocken des Behälters an und die Rückdrehsicherungselemente liegen aneinander an. Bei dieser Ausführungsform befinden sich vorzugsweise das Verdrehsicherungselement und die beiden Nocken des Behälters zwischen dem Verdrehsicherungselement und dem Nocken des Verstellelements. In dieser Drehausrichtung wird eine Drehung des Verstellelements relativ zum Behälter bis zur Aufbringung einer erhöhten Drehkraft verhindert und somit ein zweiter vorab definierter Mahlgrad eingestellt. Der Abstand von Verdrehsicherungselement und Nocken am Verstellelement und der Abstand von Verdrehsicherungselement und zweitem Nocken am Behälter sind vorteilhafterweise daher aufeinander abgestimmt. Der Verdrehweg zwischen den beiden einstellbaren Mahlgraden wird somit durch den Abstand der ersten und der zweiten Nocken am Behälter festgelegt.

Vorzugsweise weisen der Behälter und das Verstellelement jeweils ein einer Drehausrichtung zugeordnetes Nockenpaar auf, wobei jeweils diametral gegenüberliegend angeordnete Nocken von Behälter und Verstellelement zusammenwirken. Durch die diametrale Anordnung der zusammenwirkenden Nocken eines Nockenpaares wird die Sicherheit gegen ein versehentliches Verstellen des Mahlgrades erhöht. Bei einer Bewegung der Nocken des Verstellelements über die Nocken des Behälters wird die Wand des Verstellelements an der Stelle der Nocken nach außen gedrückt. Wenn dies auf diametral gegenüberliegenden Stellen geschieht, ist sichergestellt, dass nicht das gesamte Verstellelement eine verschobene Stellung einnimmt, sondern das aufgrund der diametral wirkenden Rückstellkräfte das Verstellelement zentriert am Behälter angeordnet bleibt.

Weiters ist es vorteilhaft, wenn der Behälter in einem oberen Endabschnitt angrenzend an eine obere Behälteröffnung eine umlaufende Schnapprille aufweist. Diese Schnapprille ermöglicht es insbesondere, auf einfache Weise den Stator auf dem Behälter zu befestigen und diesen gegen eine axiale Bewegung, insbesondere auch im Falle einer axiale Verschiebung des Betätigungselements samt Rotor, zu sichern.

Es ist weiters vorteilhaft wenn der Stator vorzugsweise mehrere über den Umfang verteilt angeordnete, Schnapphaken zur Verbindung mit der Schnapprille des Behältrs aufweist. Diese Ausführungsform ermöglicht eine Befestigung des Stators am Behälter, unabhängig von den übrigen Teilen des Mahlwerks. Durch diesen getrennten Befestigungsmechanismus kann der Stator mechanisch getrennt vom Rotor und vom Verbindungselement am Behälter befestigt werden. Durch die Schnapphaken, die sich vorzugsweise mit der Schnapprille verbinden, ist der Stator gegen eine axiale Bewegung relativ zum Behälter gesichert. Die axiale Position des Stators zum Behälter wird somit von einer Rotation des Verstellelements und einer Rotation oder axialen Verschiebung der Betätigungseinheit nicht beeinflusst.

In einer besonderen Ausführungsform weist der Behälter angrenzend an die obere Behälteröffnung, vorzugsweise mehrere über den Umfang verteilt angeordnete Vorsprünge auf. Die Vorsprünge ermöglichen es insbesondere einen auf dem Behälter aufgesetzten Stator gegen eine Drehung zu sichern.

In diesem Zusammenhang ist vorteilhaft, wenn der Stator, vorzugsweise mehrere über den Umfang verteilt angeordnete Vorsprünge zum Zusammenwirken mit den Vorsprüngen des Behälters aufweisen. Im verbundenen Zustand des Stators mit dem Behälter sind die Vorsprünge des Stators zwischen den Vorsprüngen des Behälters angeordnet. Somit bilden die Seitenflächen der Vorsprünge des Behälters Anschläge für die Vorsprünge des Stators, so dass dessen Dreh-Bewegungsspielraum im Wesentlichen auf den Abstand von zwei benachbarten Vorsprüngen des Stators begrenzt wird. Wenn das Betätigungsteil gedreht wird, wird eine Drehkraft durch den Rotor über das Mahlgut auf den Stator ausgeübt. Ohne einer Verdrehsicherung könnte der Stator allenfalls durchdrehen und ein Mahlen wäre nur eingeschränkt möglich. Durch die Begrenzung der Drehbewegung des Stators wird dieser in einer Position gestoppt und eine Relativbewegung zwischen Stator und Rotor, welche für das Mahlen des Mahlguts notwendig ist, wird ermöglicht.

Im Folgenden wird eine besondere Ausführungsform der Erfindung anhand von Figuren detailliert beschrieben, wobei die Erfindung nicht auf diese Ausführungsform beschränkt werden soll.
Figur 1 zeigt schematisch eine Ausführungsform eines erfindungsgemäßen Mahlwerks in einer Schnittansicht.
Figur 2 zeigt schematisch eine Ausführungsform des oberen Abschnitts eines Behälters einer erfindungsgemäßen Gewürzmühle in einer Seitenansicht.
Figur 3 zeigt schematisch die Ausführungsform nach Figur 1 in einer Ansicht von schräg unten.
Figur 4 zeigt schematisch einen Stator und ein Verstellelement eines erfindungsgemäßen Mahlwerks in Draufsicht.
Figur 5 zeigt schematisch eine Schnittansicht einer Ausführungsform einer erfindungsgemäßen Gewürzmühle im Mahlgrad "Fein".
Figur 6 zeigt schematisch eine Schnittansicht einer Ausführungsform der erfindungsgemäßen Gewürzmühle im Mahlgrad "Grob".
Figur 7 zeigt schematisch eine Schnittansicht quer zur Längsachse der erfindungsgemäßen Gewürzmühle auf Höhe der Nocken im Mahlgrad "Fein".
Figur 8 zeigt schematisch eine Schnittansicht quer zur Längsachse der erfindungsgemäßen Gewürzmühle auf Höhe der Nocken im Mahlgrad "Grob".

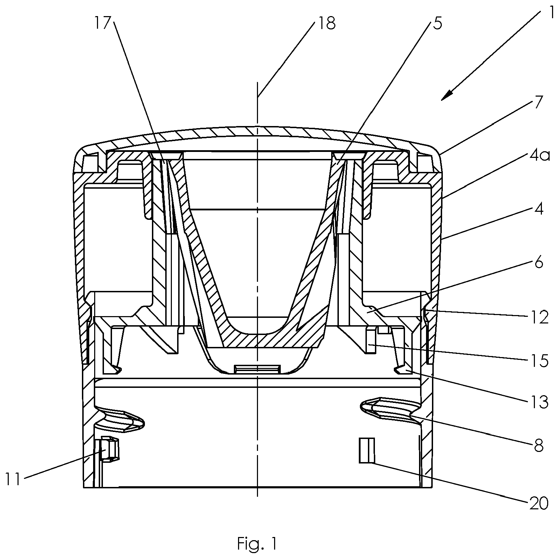

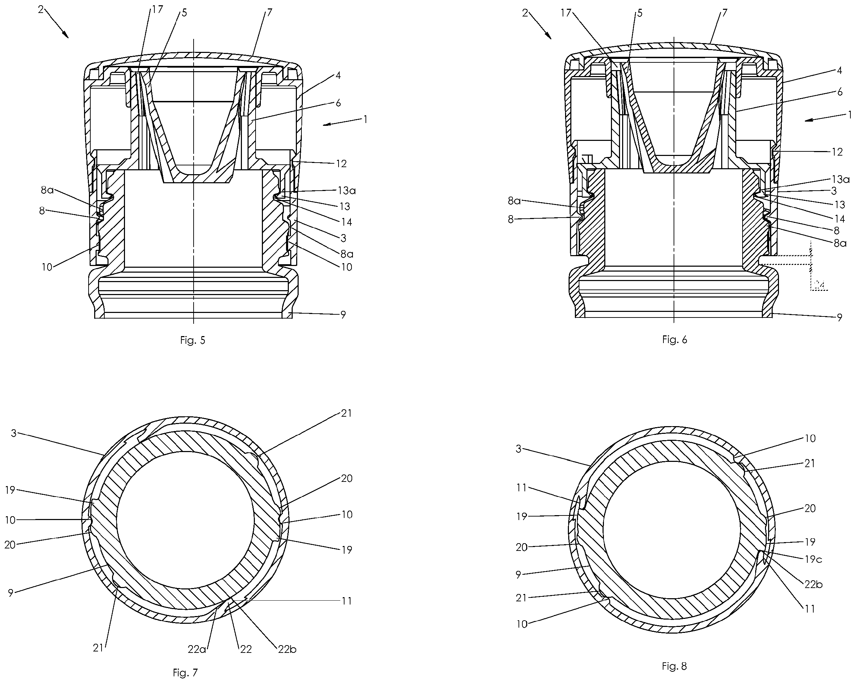

Figur 1 zeigt ein Mahlwerk 1 einer Gewürzmühle 2 (Fig. 5, 6), das ein Verstellelement 3, ein Betätigungseinheit 4, welche einen Rotor 5 und ein Betätigungselement 4a umfasst, und einen Stator 6 aufweist. Der Rotor 5 ist mit dem Betätigungselement 4a fest verbunden oder einstückig ausgebildet, so dass eine Bewegung des Betätigungselements 4a direkt auf den Rotor 5 übertragen wird. Auf der Betätigungseinheit 4 ist ein Deckel 7 aufgesetzt, welcher im Gebrauchsfall von der Betätigungseinheit 4 auf einfache Weise abgenommen werden kann.

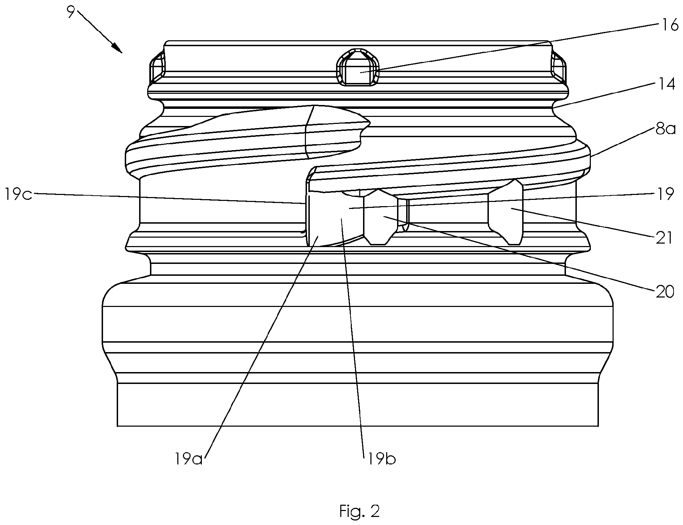

Das Verstellelement 3 weist ein Gewinde 8 auf, mit welchem es auf einen Behälter 9 (Fig. 2) aufgeschraubt werden kann. Weiters sind an einer inneren Oberfläche eines im Wesentlichen zylindrischen Mantelabschnitts des Verstellelements 3 Nocken 10 und Rückdrehsicherungselemente 11 angebracht, wobei in der gezeigten Ansicht nur jeweils ein Nocken 10 und ein Rückdrehsicherungselement 11 ersichtlich ist.

Das Verstellelement 3 ist über eine Nut-Feder-Verbindung 12 mit der Betätigungseinheit 4 verbunden, so dass diese drehbar und in Richtung einer Längsachse 18 gesichert miteinander verbunden sind. Durch eine Drehung des Verstellelements 3 am Behälter 9 verändert sich dessen Position in Richtung der Längsachse 18, dh in axialer Richtung. Diese Veränderung der Position in axialer Richtung wird über die Nut-Feder-Verbindung 12 auf das Betätigungselement 4a und somit auf den Rotor 5 übertragen.

Der Stator 6 weist, vorzugsweise mehrere über den Umfang verteilt angeordnete, Schnapphaken 13 zur Verbindung mit einer Schnapprille 14 des Behälters 9 auf. Durch die Schnapphaken 13 ist der Stator 6 axial im Wesentlichen unbeweglich mit dem Behälter 9 verbunden. Um eine Drehung des Stators 6 am Behälter 9 zu verhindern, sind Vorsprünge 15 vorgesehen, welche mit Vorsprüngen 16 des Behälters (Fig. 2) zusammenwirken und so eine Drehbewegung des Stators 6 gegenüber dem Behälter 9 begrenzen.

Zwischen Stator 6 und Rotor 5 ist ein Mahlspalt 17 ausgebildet. Da der Stator 6 über die Schnapphaken 13 in Richtung der Längsachse 18 im Wesentlichen unbeweglich mit dem Behälter 9 verbunden ist, kommt es bei einer Drehung des Verstellelements 3 zu einer Relativbewegung in Richtung der Längsachse 18 zwischen Rotor 5 und Stator 6. Aufgrund der konischen Form des Rotors 5 resultiert die axiale Relativbewegung zwischen Rotor 5 und Stator 6 in einer Veränderung der Breite des Mahlspalts 17 und somit des Mahlgrads.

Fig. 2 zeigt den oberen Abschnitt des Behälters 9, bei welchem angrenzend an die obere Behälteröffnung über den Umfang verteilt Vorsprünge 16 angeordnet sind. In der gezeigten Ausführungsform sind vier solcher Vorsprünge 16 vorhanden, wobei nur drei sichtbar sind. Unterhalb der Vorsprünge 16 weist der Behälter 9 eine umlaufende Schnapprille 14 auf, welche zur Verbindung mit den vorzugsweise mehreren über den Umfang des Stators 6 verteilt angeordneten Schnapphaken 13 vorgesehen ist. Unterhalb der Schnapprille 14 verfügt der Behälter 9 über ein Gegengewinde 8a das zum Aufschrauben des Verstellelements 3 über das Gewinde 8 und zum Einstellen des Mahlgrads über das Verstellelement 3 vorgesehen ist.

Unterhalb des Gegengewindes 8a sind ein Rückdrehsicherungselement 19 des Behälters 9, ein erster Nocken 20 und ein zweiter Nocken 21 angeordnet. Wie in Fig. 2 ersichtlich, grenzen das Rückdrehsicherungselement 19, der erste Nocken 20 und der zweite Nocken 21 direkt an die untere Flanke des Gegengewindes 8a des Behälters 9. Das Rückdrehsicherungselement 19 des Behälters 9 ist als rampenförmiger Vorsprung 19a mit einer Auflauffläche 19b und einer Sperrfläche 19c ausgebildet.

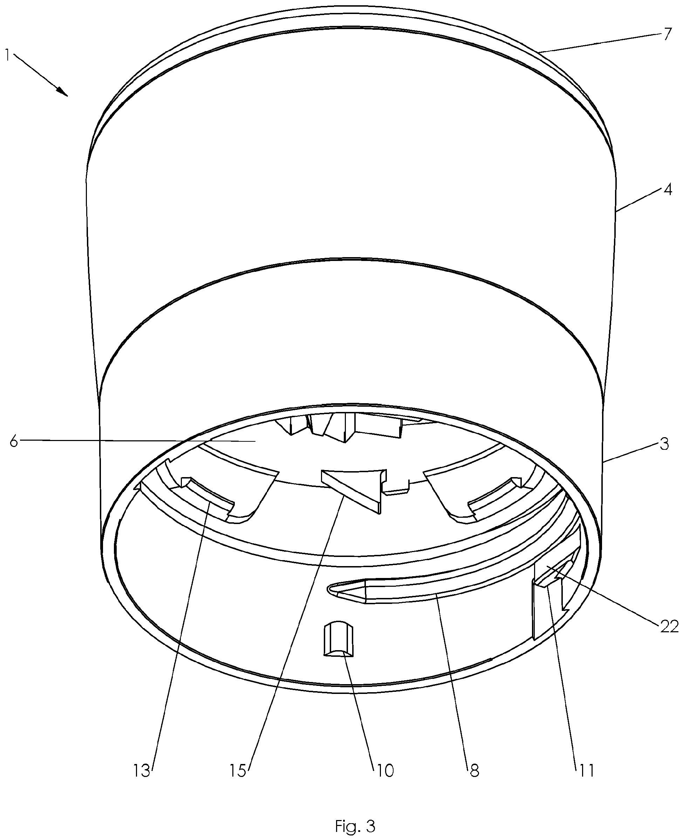

Fig. 3 zeigt das Mahlwerk 1 von schräg unten. Oben ist auf die Betätigungseinheit 4 der Deckel 7 aufgesetzt. Die Betätigungseinheit 4 ist mit dem Verstellelement 3 über die in Fig. 1 gezeigte Feder-Nut-Verbindung 12 verbunden. Auf der Innenseite des Verstellelements 3 kann man den Nocken 10, das Gewinde 8 und das Rückdrehsicherungselement 11, welches als ein in Richtung des Behälters 9 auskragendes Federelement 22 ausgebildet ist, erkennen. Beim Aufschrauben des Verstellelements 3 auf den Behälter 9 wird das Federelement 22 über die Auflauffläche 19b elastisch verformt und gleitet über den Vorsprung 19a des Rückdrehsicherungselements 19 des Behälters 9 (siehe Fig. 2, 7 und 8). Im verbundenen Zustand von Verstellelement 3 und Behälter 9 liegt das Federelement 22 bei einer Drehbewegung entgegen der Aufschraubrichtung blockierend an der Sperrfläche 19c an.

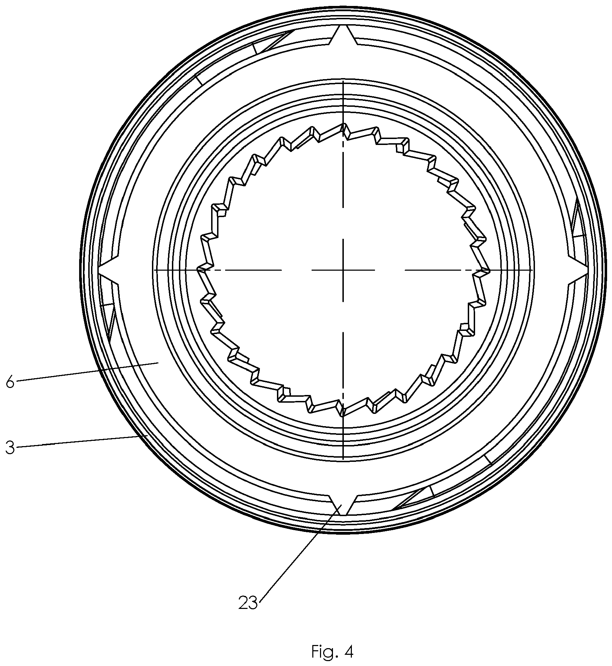

Fig. 4 zeigt den Stator 6 und das Verstellelement 3 in Draufsicht. Bei dieser Ausführungsform werden das Verstellelement 3 und der Stator 6 als ein verbundenes Teil produziert. Die Verbindung ist dabei über vier als Sollbruchstellen ausgebildete dünnwandige Verbindungselemente 23 hergestellt, welche hier über den Umfang regelmäßig verteilt angeordnet sind. Bei der Montage am Behälter 9 brechen diese Verbindungselemente 23 ab und der Stator 6 und das Verstellelement 3 sind voneinander getrennt.

Fig. 5 zeigt einen oberen Abschnitt der Ausführungsform der Gewürzmühle 2 aus den vorhergehenden Figuren, bestehend aus dem Mahlwerk 1 und dem Behälter 9 in der Mahlstellung "fein", wobei der Behälter 9 nur abschnittsweise dargestellt ist und sich in dem unteren nicht dargestellten Abschnitt die Mantelfläche in herkömmlicher Weise fortsetzt und in einer geschlossenen Bodenfläche mündet.

Eine Gegenüberstellung der Ansichten von Fig. 5 und Fig. 6 veranschaulicht insbesondere das Zusammenwirken des Verstellelements 3 des Mahlwerks 1 mit dem Behälter 9. Der Stator 6 ist über Schnapphaken 13, die in die Schnapprille 14 des Behälters 9 eingreifen, gegen eine axiale Bewegung relativ zum Behälter 9 gesichert. Die Schnapphaken 13 sind als L-förmige Elemente ausgebildet, wobei jeweils ein in Richtung des Behälters 9 gerichteter Vorsprung 13a in die Schnapprille 14 eingreift. Weiters ist der Eingriff des Gewindes 8 des Verstellelements 3 in das Gegengewinde 8a des Behälters 9 ersichtlich. In Fig. 5 ist außerdem die Schnittansicht der Nocken 10 des Verstellelements 3 zu sehen, die sich zwischen den Auflaufflächen 19b und den ersten Nocken 20 des Behälters 9 befinden.

Fig. 6 zeigt die Gewürzmühle 2 aus Fig. 5 in der Mahlstellung "grob". Das Verstellelement 3 ist im Vergleich zur Darstellung aus Fig. 5 verdreht und befindet sich in einer um die Distanz 24 höheren Position. Durch die Kopplung der axialen Bewegung von Verstellelement 3 und Betätigungselement 4a wird die Betätigungseinheit 4 und somit auch der Rotor 5 ebenfalls um die Distanz 24 erhöht. Durch die in Richtung der Längsachse 18 im Wesentlichen unbewegliche Verbindung des Stators 6 mit dem Behälter 9, bleibt der Stator 6 in seiner Position und der Mahlspalt 17 vergrößert sich.

Die Figuren 7 und 8 zeigen eine Schnittansicht quer zur Längsachse 18 in der Höhe der Nocken 10, 20, 21 und Verstellelemente 11, 19 durch den Behälter 9 und das Verstellelement 3.

Fig. 7 zeigt die Schnittansicht der Mühle 2 in der Mahlstellung "fein". Es ist erkennbar, dass die Nocken 10 des Verstellelements 3 zwischen den ersten Nocken 20 und den Rückdrehsicherungselementen 19 des Behälters 9 eingerastet sind. Um die Nocken 10 aus dieser Position herauszubewegen, ist eine erhöhte Drehkraft erforderlich. In Fig. 7 kann man ebenfalls die Ausbildung des Rückdrehsicherungselements 11 als in Richtung des Behälters auskragendes Federelement 22 erkennen. Bei der Montage wird das Federelement 22 durch die Nocken 20, 21 und das Rückdrehsicherungselement 19 elastisch verformt und kann diese so passieren. Das Federelement 22 weist, ähnlich zum Rückdrehsicherungselement 19 am Behälter 9, eine Auflauffläche 22a und eine Sperrfläche 22b auf. Dadurch ist ein Abschrauben des Verstellelements 3 vom Behälter 9 nur so weit möglich, bis die Sperrflächen 19c, 22b einander kontaktieren.

Fig. 8 zeigt die Schnittansicht der Mühle 2 quer zur Längsachse 18 in der Mahlstellung "grob". Die Sperrflächen 19c, 22b der Rückdrehsicherungselemente 19, 11 von Behälter 9 und Verstellelement 3 sind dabei in Kontakt, sodass ein weiteres Aufschrauben des Verstellelements 3 nicht möglich ist. Die Nocken 10 des Verstellelements 3 ist dabei mit den zweiten Nocken 21 des Behälters in Kontakt, so dass für eine Verdrehung des Verstellelements 3 in Richtung der "Fein"-Mahlstellung gemäß Fig. 7 eine erhöhten Drehkraft aufgebracht werden muss, bis die der Nocken 10 über die Nocken 21 überschnappen. Somit ist das Verstellelement 3 in einer definierten Position am Behälter 9 angeordnet.

## Patentansprüche

1. Mahlwerk (1) für eine Gewürzmühle (2)
mit einem Stator (6),
wobei der Stator (6) mit einem Behälter (9) verbindbar ist und
die Position des Stators (6) im verbundenen Zustand in Richtung einer Längsachse (18) des Mahlwerks (1) gegenüber dem Behälter (9) im Wesentlichen definiert ist und
mit einer Betätigungseinheit (4),
die einen Rotor (5) aufweist,
wobei der Rotor (5) zumindest abschnittsweise innerhalb des Stators (6) angeordnet und gegenüberdem Stator (6) drehbar gelagert ist,
wobei der Rotor (5) mit einem Betätigungselement (4a) drehfest verbunden ist, wobei
das Betätigungselement (4a) mit einem Verstellelement (3) drehbar und in Richtung der Längsachse (18) gesichert verbunden ist, **dadurch gekennzeichnet**
das Verstellelement (3) ein Gewinde (8) aufweist, mit dem es mit dem Behälter (9) verbindbar ist und der Behälter (9) ein Gegengewinde (8a) für das Gewinde (8)
des Verstellelements (3) aufweist, so dass die Position des Rotors (5) in Richtung der Längsachse (18) mittels einer Verdrehung des Verstellelements (3) gegenüber dem Behälter (9) einstellbar ist.

2. Mahlwerk (1) nach Anspruch 1, **dadurch gekennzeichnet, dass** Verstellelement (3) und Betätigungselement (4a) über eine Feder-Nut-Verbindung (12) miteinander verbunden sind.

3. Gewürzmühle (2)
mit einem Behälter (9) und mit einem Mahlwerk (1), das einen Stator (6) aufweist,
wobei der Stator (6) mit dem Behälter (9) verbunden ist **dadurch gekennzeichnet, dass** ein Mahlwerk (1) nach Anspruch 1 oder 2 vorgesehen ist, wobei das Verstellelement (3) ein Gewinde (8) aufweist, mit dem es mit dem Behälter (9) verbunden ist und der Behälter (9) ein Gegengewinde (8a) für das Gewinde (8) des Verstellelements (3) aufweist, so dass die Position des Rotors (5) in Richtung der Längsachse (18) mittels einer Verdrehung des Verstellelements (3) gegenüber dem Behälter (9) einstellbar ist.

4. Gewürzmühle (2) nach Anspruch 3, **dadurch gekennzeichnet, dass** das Verstellelement (3) und der Behälter (9) zusammenwirkende Rückdrehsicherungselemente (11, 19) aufweisen, so dass ein auf dem Behälter (9) aufgeschraubtes Verstellelement (3) nicht zerstörungsfrei vom Behälter (9) lösbar ist.

5. Gewürzmühle (2) nach Anspruch 4, **dadurch gekennzeichnet, dass** der Behälter (2) als Rückdrehsicherungselement (19) einen rampenförmigen Vorsprung (19a) mit einer Auflauffläche (19b) und einer Sperrfläche (19c) aufweist und das Verstellelement (3) als Rückdrehsicherungselement (11) ein in Richtung des Behälters auskragendes Federelement (22) aufweist, wobei beim Aufschrauben des Verstellelements (3) auf den Behälter (9) das Federelement (22) über die Auflauffläche (22a) elastisch verformt wird und über den Vorsprung (19a) gleitet, so dass das Federelement (22) bei einer Drehbewegung entgegen der Aufschraubrichtung blockierend an der Sperrfläche (19c) anliegt.

6. Gewürzmühle (2) nach einem der Ansprüche 3 bis 5, **dadurch gekennzeichnet, dass** das Verstellelement (3) an einer Innenseite zumindest einen nach innen in Richtung des Behälters (9) vorspringenden Nocken (10) aufweist.

7. Gewürzmühle (2) nach Anspruch 6, **dadurch gekennzeichnet, dass** an einer Außenseite des Behälters (9) zumindest ein nach außen vorspringender Nocken (20), vorzugsweise an eine Flanke des Gegengewindes (8a) unmittelbar anschließend, vorgesehen ist.

8. Gewürzmühle (2) nach Anspruch 7, **dadurch gekennzeichnet, dass** an einer Außenseite des Behälters (9) zumindest zwei in Aufschraubrichtung voneinander beabstandet angeordnete Nocken (20, 21) vorgesehen sind.

9. Gewürzmühle (2) nach einem der Ansprüche 7 oder 8, **dadurch gekennzeichnet, dass** der zumindest eine Nocken (10) des Verstellelements (3) in einer ersten Drehausrichtung des Verstellelements (3) an einem Nocken (20) des Behälters (9) anliegt, wobei bei Aufbringen einer erhöhten Drehkraft das Verstellelement (3) elastisch verformbar ist, so dass der Nocken (10) des Verstellelements (3) über den Nocken (20) des Behälters (9) bewegbar ist.

10. Gewürzmühle (2) nach einem der Ansprüche 7 bis 9, **dadurch gekennzeichnet, dass** in einer zweiten Drehausrichtung des Verstellelements (3) der Nocken (10) des Verstellelements (3) an dem zweiten Nocken (21) des Behälters (9) anliegt und die Rückdrehsicherungselemente (11, 19) aneinander anliegen.

11. Gewürzmühle (2) nach einem der Ansprüche 8 bis 10, **dadurch gekennzeichnet, dass** der Behälter (9) und das Verstellelement (3) jeweils ein einer Drehausrichtung zugeordnetes Nockenpaar(10, 20, 21) aufweisen, wobei jeweils diametral gegenüberliegend angeordnete Nocken (10, 20, 21) von Behälter (9) und Verstellelement (3) zusammenwirken.

12. Gewürzmühle (2) nach einem der Ansprüche 3 bis 11, **dadurch gekennzeichnet, dass** der Behälter (9) in einem oberen Endabschnitt angrenzend an eine obere Behälteröffnung eine umlaufende Schnapprille (14) aufweist.

13. Gewürzmühle (2) nach Anspruch 12, **dadurch gekennzeichnet, dass** der Stator (6), vorzugsweise mehrere über den Umfang verteilt angeordnete, Schnapphaken (13) zur Verbindung mit der Schnapprille (14) des Behälters (9) aufweist.

14. Gewürzmühle (2) nach einem der Ansprüche 3 bis 13, **dadurch gekennzeichnet, dass** der Behälter (9) angrenzend an die obere Behälteröffnung, vorzugsweise mehrere über den Umfang verteilt angeordnete Vorsprünge (16) aufweist.

15. Gewürzmühle (2) nach Anspruch 14, **dadurch gekennzeichnet, dass** der Stator (6), vorzugsweise mehrere über den Umfang verteilt angeordnete Vorsprünge (15) zum Zusammenwirken mit den Vorsprüngen (16) des Behälters (9) aufweist.

## Claims

1. Grinder (1) for a spice mill (2),
having a stator (6),
wherein the stator (6) can be connected to a container (9) and
the position of the stator (6) in the connected state is substantially defined in the direction of a longitudinal axis (18) of the grinder (1) relative to the container (9), and
having an actuating unit (4)
which comprises a rotor (5),
wherein the rotor (5) is arranged, at least in portions, within the stator (6) and is rotatably mounted relative to the stator (6),
wherein the rotor (5) is connected to an actuating element (4a) for conjoint rotation, wherein
the actuating element (4a) is connected to an adjusting element (3) in a rotatable manner and so as to be secured in the direction of the longitudinal axis (18), **characterised in that**
the adjusting element (3) comprises a thread (8), with which it can be connected to the container (9), and the container (9) comprises a mating thread (8a) for the thread (8) of the adjusting element (3), such that the position of the rotor (5) in the direction of the longitudinal axis (18) can be adjusted by means of a rotation of the adjusting element (3) relative to the container (9).

2. Grinder (1) according to claim 1, **characterised in that** the adjusting element (3) and the actuating element (4a) are connected to each other by a tongue-groove connection (12).

3. Spice mill (2)
having a container (9) and a grinder (1) which comprises a stator (6),
wherein the stator (6) is connected to the container (9), **characterised in that** a grinder (1) according to either claim 1 or claim 2 is provided, wherein the adjusting element (3) comprises a thread (8), with which it is connected to the container (9), and the container (9) comprises a mating thread (8a) for the thread (8) of the adjusting element (3), such that the position of the rotor (5) in the direction of the longitudinal axis (18) can be adjusted by means of a rotation of the adjusting element (3) relative to the container (9).

4. Spice mill (2) according to claim 3, **characterised in that** the adjusting element (3) and the container (9) comprise interacting anti-reverse rotation elements (11, 19), such that an adjusting element (3) screwed onto the container (9) cannot be detached from the container (9) without being destroyed.

5. Spice mill (2) according to claim 4, **characterised in that** the container (2) comprises, as an anti-reverse rotation element (19), a ramp-shaped projection (19a) with a run-up surface (19b) and a balking surface (19c), and the adjusting element (3) comprises, as an anti-reverse rotation element (11), a spring element (22) projecting in the direction of the container, wherein when the adjusting element (3) is screwed onto the container (9), the spring element (22) is elastically deformed over the run-up surface (22a) and slides over the projection (19a), such that the spring element (22) bears against the balking surface (19c) in a blocking manner in the event of a rotational movement counter to the screwing-on direction.

6. Spice mill (2) according to any of claims 3 to 5, **characterised in that** the adjusting element (3) comprises, on an inner face, at least one cam (10) projecting inwards in the direction of the container (9).

7. Spice mill (2) according to claim 6, **characterised in that** at least one outwardly projecting cam (20), preferably directly adjoining a flank of the mating thread (8a), is provided on an outer face of the container (9).

8. Spice mill (2) according to claim 7, **characterised in that** at least two cams (20, 21), arranged at a distance from each another in the screwing-on direction, are provided on an outer face of the container (9).

9. Spice mill (2) according to either claim 7 or claim 8, **characterised in that** the at least one cam (10) of the adjusting element (3) bears against a cam (20) of the container (9) in a first rotational orientation of the adjusting element (3), wherein when an increased rotational force is applied, the adjusting element (3) is elastically deformable, such that the cam (10) of the adjusting element (3) can be moved over the cam (20) of the container (9).

10. Spice mill (2) according to any of claims 7 to 9, **characterised in that,** in a second rotational orientation of the adjusting element (3), the cam (10) of the adjusting element (3) bears against the second cam (21) of the container (9) and the anti-reverse rotation elements (11, 19) bear against each other.

11. Spice mill (2) according to any of claims 8 to 10, **characterised in that** the container (9) and the adjusting element (3) each comprise a pair of cams (10, 20, 21) associated with a rotational orientation, wherein cams (10, 20, 21) of the container (9) and the adjusting element (3), which are in each case arranged so as to be diametrically opposed, interact.

12. Spice mill (2) according to any of claims 3 to 11, **characterised in that** the container (9) comprises a circumferential snap-on groove (14) in an upper end portion adjacent to an upper container opening.

13. Spice mill (2) according to claim 12, **characterised in that** the stator (6) comprises snap hooks (13), preferably a plurality of snap hooks distributed over the circumference, for connection to the snap-on groove (14) of the container (9).

14. Spice mill (2) according to any of claims 3 to 13, **characterised in that,** adjacent to the upper container opening, the container (9) preferably comprises a plurality of projections (16) distributed over the circumference.

15. Spice mill (2) according to claim 14, **characterised in that** the stator (6) preferably comprises a plurality of projections (15), distributed over the circumference, for interaction with the projections (16) of the container (9).

## Revendications

1. Broyeur (1) pour un moulin à épices (2)
avec un stator (6),
où le stator (6) peut être relié à un récipient (9) et
la position du stator (6) à l'état relié est sensiblement définie dans la direction d'un axe longitudinal (18) du broyeur (1) par rapport au récipient (9) et
avec une unité d'actionnement (4),
qui présente un rotor (5),
où le rotor (5) est disposé au moins par sections à l'intérieur du stator (6) et est monté rotatif par rapport au stator (6),
où le rotor (5) est relié à un élément d'actionnement (4a) de manière solidaire en rotation, où
l'élément d'actionnement (4a) est relié de manière solidaire en rotation à un élément de réglage (3) et fixée dans la direction de l'axe longitudinal (18), **caractérisé en ce que**
l'élément de réglage (3) présente un filetage (8) avec lequel il peut être relié au récipient (9) et le récipient (9) présente un contre-filetage (8a) pour le filetage (8) de l'élément de réglage (3), de sorte que la position du rotor (5) dans la direction de l'axe longitudinal (18) peut être ajustée au moyen d'une rotation de l'élément de réglage (3) par rapport au récipient (9).

2. Broyeur (1) selon la revendication 1, **caractérisé en ce que** l'élément de réglage (3) et l'élément d'actionnement (4a) sont reliés l'un à l'autre par l'intermédiaire d'une liaison à rainure et languette (12).

3. Moulin à épices (2)
avec un récipient (9) et avec un broyeur (1) qui présente un stator (6),
où le stator (6) est relié au récipient (9), **caractérisé en ce qu'**un broyeur (1) selon la revendication 1 ou 2 est prévu, où l'élément de réglage (3) présente un filetage (8) avec lequel il est relié au récipient (9) et le récipient (9) présente un contre-filetage (8a) pour le filetage (8) de l'élément de réglage (3), de sorte que la position du rotor (5) dans la direction de l'axe longitudinal (18) peut être ajustée au moyen d'une rotation de l'élément de réglage (3) par rapport au récipient (9).

4. Moulin à épices (2) selon la revendication 3, **caractérisé en ce que** l'élément de réglage (3) et le récipient (9) présentent des éléments anti-rotation inverse (11, 19) qui coopèrent, de sorte qu'un élément de réglage (3) vissé sur le récipient (9) ne peut pas être séparé du récipient (9) sans destruction.

5. Moulin à épices (2) selon la revendication 4, **caractérisé en ce que** le récipient (2) présente comme élément anti-rotation inverse (19) une saillie en forme de rampe (19a) avec une surface inclinée (19b) et une surface d'arrêt (19c) et l'élément de réglage (3) présente comme élément anti-rotation inverse (11) un élément formant ressort (22) faisant saillie en direction du récipient, où lorsque l'élément de réglage (3) est vissé sur le récipient (9), l'élément formant ressort (22) est déformé élastiquement sur la surface inclinée (22a) et glisse sur la saillie (19a), de sorte que l'élément formant ressort (22) est en contact avec la surface d'arrêt (19c) de manière à bloquer lors d'un mouvement de rotation contre le sens de vissage.

6. Moulin à épices (2) selon l'une des revendications 3 à 5, **caractérisé en ce que** l'élément de réglage (3) présente sur un côté intérieur au moins une came (10) faisant saillie vers l'intérieur en direction du récipient (9).

7. Moulin à épices (2) selon la revendication 6, **caractérisé en ce que** sur un côté extérieur du récipient (9) il est prévu au moins une came (20) faisant saillie vers l'extérieur, de préférence immédiatement adjacente à un flanc du contre-filetage (8a).

8. Moulin à épices (2) selon la revendication 7, **caractérisé en ce qu'**au moins deux cames (20, 21) disposées à distance l'une de l'autre dans le sens de vissage sont prévues sur un côté extérieur du récipient (9).

9. Moulin à épices (2) selon l'une des revendications 7 ou 8, **caractérisé en ce que** la au moins une came (10) de l'élément de réglage (3) est en contact avec une came (20) du récipient (9) dans une première orientation de rotation de l'élément de réglage (3), où l'élément de réglage (3) est élastiquement déformable lors de l'application d'une force de rotation accrue, de sorte que la came (10) de l'élément de réglage (3) peut être déplacée sur la came (20) du récipient (9).

10. Moulin à épices (2) selon l'une des revendications 7 à 9, **caractérisé en ce que** dans une deuxième orientation de rotation de l'élément de réglage (3) la came (10) de l'élément de réglage (3) est en contact avec la deuxième came (21) du récipient (9) et les éléments anti-rotation inverse (11, 19) sont en contact l'un avec l'autre.

11. Moulin à épices (2) selon l'une des revendications 8 à 10, **caractérisé en ce que** le récipient (9) et l'élément de réglage (3) présentent chacun une paire de cames (10, 20, 21) associées à chaque fois à une orientation de rotation, où les cames (10, 20, 21) du récipient (9) et de l'élément de réglage (3) disposées de manière diamétralement opposée coopèrent.

12. Moulin à épices (2) selon l'une des revendications 3 à 11, **caractérisé en ce que** le récipient (9) présente une rainure d'encliquetage circonférentielle (14) dans une section d'extrémité supérieure adjacente à une ouverture supérieure du récipient.

13. Moulin à épices (2) selon la revendication 12, **caractérisé en ce que** le stator (6) présente de préférence plusieurs crochets d'encliquetage (13) disposés en étant répartis sur la circonférence pour la liaison à la rainure d'encliquetage (14) du récipient (9).

14. Moulin à épices (2) selon l'une des revendications 3 à 13, **caractérisé en ce que** le récipient (9) présente de manière contiguë à l'ouverture supérieure du récipient de préférence plusieurs saillies (16) disposées en étant réparties sur la circonférence.

15. Moulin à épices (2) selon la revendication 14, **caractérisé en ce que** le stator (6) présente de préférence plusieurs saillies (15) disposées en étant réparties sur la circonférence pour coopérer avec les saillies (16) du récipient (9).
